# EUROPEAN PATENT APPLICATION

(11) **EP 4 796 235 A1**
(43) Date of publication of application: **26.08.2026**
(21) Application number: 25822317.1
(22) Date of filing: 04.06.2025
(51) Int. Cl.: B08B 1/16, B08B 1/52, B08B 5/04, B30B 3/04, H01M 4/139

(54) **ROLL CLEANING APPARATUS**

(30) Priority: 13.06.2024 KR 20240077143
(71) Applicant: LG Energy Solution, Ltd., Seoul 07335 (KR)
(72) Inventor: KANG, Ho Jun, Daejeon 34122 (KR); KIM, Sang Min, Daejeon 34122 (KR); KIM, Dong Hyun, Daejeon 34122 (KR); CHAE, Hyeong Geun, Daejeon 34122 (KR); YOON, Han Ju, Daejeon 34122 (KR); MOON, Young Gyu, Daejeon 34122 (KR); CHOI, Hyun Woo, Daejeon 34122 (KR); HUH, Seung, Daejeon 34122 (KR); CHOI, Pa Ul, Daejeon 34122 (KR); BAK, So Yeong, Daejeon 34122 (KR); YOUN, Seung Min, Daejeon 34122 (KR)
(74) Representative: Plasseraud IP
(86) International application number: PCT/KR2025/007624
(87) International publication number: WO 2025/258908

(57) **Abstract**

A roll cleaning device according to one example of the present invention may comprise a cleaning head including a cleaning body having a foreign material suction passage, a knife mounted on the cleaning body to be contactable with a surface of a roll, and a clamp arranged to fix a wiper to the cleaning body, and a foreign material suction part connected to the cleaning body to be fluidly movable with the foreign material suction passage and arranged to suction foreign materials present on the surface of the roll through the foreign material suction passage.

## Description

### Technical Field

The present invention relates to a roll cleaning device, which relates to a roll cleaning device capable of performing cleaning processes of scraping foreign materials from a surface of a roll, suctioning the scraped foreign materials, and wiping the roll surface at once.

This application claims the benefit of priority to Korean Patent Application No. 10-2024-0077143 dated June 13, 2024, the disclosure of which is incorporated herein by reference in its entirety.

### Background Art

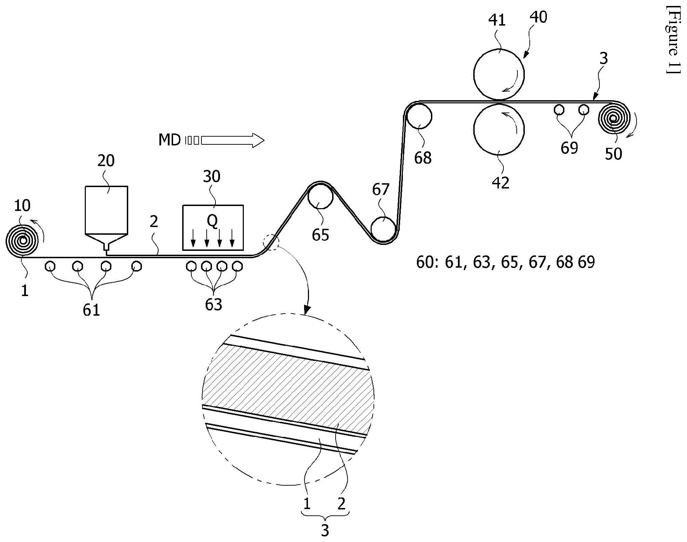

Figure 1 is a diagram for explaining an electrode process of processes for manufacturing a secondary battery.

Referring to Figure 1, in the electrode process, the base material (1) is manufactured into a coated electrode (3) while traveling from an unwinder (10) to a rewinder (50) in a roll-to-roll manner. The base material (1) is transferred through a transfer part (60).

The unwinder (10) can unwind the base material (1) in the moving direction (MD). The rewinder (50) can wind the traveling coated electrode (3).

The coated electrode (3) comprises the base material (1) and a coating layer (2). The coated electrode (3) is wound around the rewinder (50) in a roll shape.

In a section between the unwinder (10) and the rewinder (50), a coating part (20), a drying part (30), and a rolling part (40) are sequentially disposed along the moving direction (MD) of the base material (1).

The coating part (20) is arranged to apply a slurry to the traveling base material (1). The drying part (30) is arranged to provide heat (Q) to the base material (1) applied with the slurry. The rolling part (40) comprises a pair of rolling rolls (41, 42), and the pair of rolling rolls (41, 42) is arranged to pressurize the traveling electrode base material (3) up and down while rotating.

The transfer part (60) comprises a plurality of rolls (61, 63, 65, 67, 68, 69).

For example, the base material (1) can pass through the coating part (20), the drying part (30), and the rolling part (40) while traveling from the unwinder (10) toward the rewinder (50) along approximately 100 or more rolls (61, 63, 65, 67, 68, 69).

In the electrode process, the coated electrode (3) can contaminate the rolls (61, 63, 65, 67, 68, 69) that come into contact during traveling.

As described above, contamination of the rolls (61, 63, 65, 67, 68, 69) causes the quality of the coated electrode (3) to deteriorate by damaging and contaminating the coated electrode (3).

To solve such a problem, conventionally, workers manually scraped off foreign materials formed by hardened slurries from the roll surfaces of the rolls (61, 63, 65, 67, 68, 69) using a knife, or removed foreign materials formed by dried liquid substances or foreign materials with electrode powder attached using a wiper absorbed with a cleaning fluid.

However, due to the nature of the electrode process, when manually cleaning the roll surfaces of the rolls (61, 63, 65, 67, 68, 69), foreign materials were often present in locations unreachable by workers, or there were difficulties in cleaning the high-temperature rolls (61, 63, 65, 67, 68, 69).

Furthermore, there were inconveniences for workers to have to perform cleaning tasks by varying cleaning tools depending on the type of foreign materials attached to the rolls (61, 63, 65, 67, 68, 69), for example, foreign materials formed by hardened liquid substances, foreign materials formed by hardened slurries, or foreign materials formed by attached electrode powder.

### Disclosure

### Technical Problem

The present invention has been devised to solve such problems, which aims to provide a roll cleaning device capable of performing cleaning processes of scraping foreign materials from a surface of a roll, suctioning the scraped foreign materials, and wiping the roll surface at once

### Technical Solution

A roll cleaning device according to one example of the present invention may comprise a cleaning head including a cleaning body having a foreign material suction passage, a knife mounted on the cleaning body to be contactable with a surface of a roll, and a clamp arranged to fix a wiper to the cleaning body, and a foreign material suction part connected to the cleaning body to be fluidly movable with the foreign material suction passage and arranged to suction foreign materials present on the surface of the roll through the foreign material suction passage.

Furthermore, a roll cleaning device according to one example of the present invention may comprise a cleaning head including a cleaning body having a foreign material suction passage and a cleaning fluid passage partitioned from the foreign material suction passage, a knife mounted on the cleaning body to be contactable with a surface of a roll, and a clamp arranged to fix a wiper to the cleaning body, and a foreign material suction part connected to the cleaning body to be fluidly movable with the foreign material suction passage and arranged to suction foreign materials present on the surface of the roll through the foreign material suction passage.

The cleaning body may comprise a first sidewall surrounding the knife, and a second sidewall facing the first sidewall and having the wiper mounted, and the knife and the wiper may be arranged to be contactable with the roll surface.

The cleaning body may comprise a lower surface connecting the first sidewall and the second sidewall, and the knife may be mounted on the cleaning body to protrude further toward the roll than the lower surface, and it may be arranged so that a space is formed between the surface of the roll and a partial region of the lower surface when the knife contacts the surface of the roll.

The cleaning body may be arranged so that the foreign material suction passage penetrates the lower surface between the knife and the first sidewall.

The foreign material suction part may comprise an extension tube connected to be fluidly movable with the foreign material suction passage and detachably coupled to the cleaning body, and the extension tube may be arranged with a handle, and the handle may be arranged to be capable of adjusting the position of the cleaning head placed on the surface of the roll at a position spaced apart from the roll.

The foreign material suction part may comprise a foreign material container arranged to be capable of accommodating foreign materials, a corrugated pipe detachably coupled to the foreign material container and the extension tube, and connected to be fluidly movable with the foreign material suction passage through the extension tube, and a suction drive part which is movable so that the foreign material container, the corrugated pipe, and the extension tube are evacuated by sucking air from the foreign material container.

The roll cleaning device may comprise a support arranged so that the extension tube enables to be seated, and may further comprise a height adjustment part arranged to adjust the height of the support in a height direction perpendicular to a bottom surface.

The support may be arranged to guide the movement of the extension tube so that the extension tube is movable back and forth along a longitudinal direction of the roll.

The cleaning fluid passage may be arranged to penetrate the lower surface of the cleaning body while being partitioned from the foreign material suction passage. Furthermore, a cleaning fluid may be arranged to be provided to the surface of the roll through the cleaning fluid passage.

The cleaning head may further comprise a drop part mounted on the cleaning body to discharge the cleaning fluid in the form of drops from the cleaning fluid passage.

The cleaning head may comprise a head nozzle connected to the cleaning fluid passage and mounted on the lower surface of the cleaning body to spray the cleaning fluid onto the surface of the roll.

Furthermore, the roll cleaning device may comprise a cleaning fluid supply part mounted on the cleaning body to be fluidly movable with the cleaning fluid passage and arranged to supply the cleaning fluid.

The cleaning fluid supply part may comprise a cleaning fluid supply pipe connected to be fluidly movable with the cleaning fluid passage and detachably coupled to the cleaning body, a cleaning fluid container storing the cleaning fluid, and a cleaning fluid drive part connected to the cleaning fluid container and the cleaning fluid supply pipe, and arranged to suck the cleaning fluid from the cleaning fluid container and to discharge it into the cleaning fluid supply pipe.

The cleaning fluid supply pipe may be mounted on the extension tube of the foreign material suction part and may be arranged to be movable together with the extension tube.

The clamp may be mounted on an upper surface opposite the lower surface of the cleaning body, and may be arranged to fix both ends of the wiper mounted on the second sidewall, respectively, to the upper surface of the cleaning body.

The clamp may comprise a push bar arranged to fix one end of the wiper to the upper surface of the cleaning body, and a fixed axis connecting the push bar and the cleaning body and elastically coupled to the cleaning body.

The cleaning body may comprise a third sidewall and a fourth sidewall connecting the first sidewall and the second sidewall, and arranged to face each other, and may further comprise a bearing member mounted on the third sidewall and the fourth sidewall, and arranged to be capable of idling along the surface of the roll upon movement of the cleaning body.

The wiper may be arranged to be capable of absorbing liquids present on the surface of the roll.

The knife may have a hardness lower than that of the roll.

The roll cleaning device may further comprise a cleaning fluid supply part arranged to spray a cleaning fluid onto the surface of the roll from the outside of the cleaning body.

### Advantageous Effects

As discussed above, the roll cleaning device related to at least one example of the present invention has the following effects.

The roll cleaning device can simultaneously perform processes of scraping foreign materials from the surface of the roll and wiping the surface of the roll using the rotational force of the roll in a state where the knife and the wiper of the cleaning head are placed to be in contact with the surface of the roll.

Also, the roll cleaning device can shorten a cleaning time of the roll by performing cleaning processes of scraping foreign materials from the surface of the roll, sucking the scraped foreign materials, and wiping the surface of the roll at once.

Furthermore, the roll cleaning device can prevent the foreign materials from remaining on the relevant roll or contaminating surroundings of the roll by scraping foreign materials from the surface of the roll with the knife and simultaneously sucking the foreign materials through the foreign material suction passage arranged in the cleaning head.

In addition, the roll cleaning device can thoroughly clean foreign materials remaining on the surface of the roll by a method in which the cleaning fluid is supplied to the surface of the roll and the wiper absorbing the cleaning fluid wipes the surface of the rotating roll in a state where it is in contact with the surface of the roll.

Also, the extension tube of the foreign material suction part can adjust the position of the cleaning head at the position away from the roll, thereby cleaning high-temperature rolls disposed at the drying part and the rear end of the drying part, and rolls disposed in narrow spaces.

Furthermore, the roll cleaning device can also clean the roll during traveling of the coated electrode, thereby preventing reduced productivity of the coated electrode due to the roll cleaning work.

In addition, it is possible to prevent quality loss of the coated electrode through the roll cleaning.

### Description of Drawings

Figure 1 schematically illustrates an electrode process diagram.
Figure 2 schematically illustrates an installation state diagram of a roll cleaning device according to a first example of the present invention mounted on a roll.
Figure 3 schematically illustrates a perspective diagram of a cleaning head according to a first example of the present invention.
Figure 4 is an A-A cross-sectional diagram of Figure 3.
Figures 5 and 6 are B-B cross-sectional diagrams of Figure 3, where Figure 5 is a diagram for explaining a structure of a cleaning head arranged to discharge a cleaning fluid in a drop manner according to one example, and Figure 6 is a diagram for explaining a structure of a cleaning head arranged to inwardly spray a cleaning fluid onto a surface of a roll according to another example.
Figure 7 is an arrangement state diagram of a cleaning head upon roll cleaning during traveling of a coated electrode.
Figure 8 is an installation state diagram of a cleaning head, in which a bearing member is provided therein, mounted on a roll according to a second example.
Figure 9 is a diagram for explaining a structure of a cleaning head arranged to outwardly spray a cleaning fluid according to a third example.

### Mode for Invention

Hereinafter, with reference to the accompanying drawings, a roll cleaning device related to one example of the present invention will be described.

The roll cleaning device of the present invention may be used to clean a roll that guides traveling of a coated electrode during an electrode process.

Before describing the roll cleaning device, an electrode process will be described as follows.

Referring to Figure 1, in the electrode process, a base material (1) is connected to an unwinder (10) and a rewinder (50) in a roll-to-roll fashion, and is manufactured to a coated electrode (3) while passing sequentially through a coating part (20), a drying part (30), and a rolling part (40) along a moving direction (MD) from the unwinder (10) toward the rewinder (50). The coated electrode (3) is wound around the rewinder (50) in the form of an electrode roll.

The coating part (20) is arranged to apply a slurry to the traveling base material (1). The drying part (30) is disposed at the rear end of the coating part (20) to provide heat (Q) to the slurry-applied base material (1). The slurry applied to the base material (1) dries while passing through the drying part (30), thereby forming a coating layer (2).

The rolling part (40) is disposed at the rear end of the drying part (30). A pair of rolling rolls (41, 42) of the rolling part (40) may pressurize the coated electrode (3) up and down while rotating in directions opposite to each other, thereby rolling the coating layer (2).

The coated electrode (3) may be rolled while passing through the rolling part (40), and may be wound in the form of an electrode roll on the rewinder (50).

The coated electrode (3) sequentially passes through the coating part (20), the drying part (30), and the rolling part (40) while traveling along a plurality of rolls (61, 63, 65, 67, 68, 69) disposed between the unwinder (10) and the rewinder (50), where during this process, the rolls (61, 63, 65, 67, 68, 69) may be contaminated.

In the electrode process, a transfer part (60) may comprise a plurality of rolls (61, 63, 65, 67, 68, 69), and the transfer part (60) may be configured in a roll-to-roll manner. The number of rolls used in the transfer part (60) may be approximately 100 or more. The plurality of rolls (61, 63, 65, 67, 68, 69) may be classified into a first roll (61) to a sixth roll (69) depending on the installation positions in the direction from the coating part (20) toward the rolling part (40).

The first roll (61) is disposed at the front end of the drying part (30). The second roll (63) is disposed in the drying part (30). The third roll (65) is disposed at the rear end of the drying part (30). The fourth roll (67) is disposed to guide traveling of the coated electrode (3) while being in contact with the coating layer (2) between the drying part (30) and the rolling part (40). The fifth roll (68) is disposed at the front end of the rolling part (40). The sixth roll (69) is disposed at the rear end of the rolling part (40).

The foreign materials on the first roll (61) and the second roll (63) may be materials in the form of a liquid flowing from the slurry. The foreign materials on the second roll (65) to the sixth roll (69) may be electrode powder detached from the coating layer (2) while the slurry is overdried. The foreign materials on the fourth roll (67) may be foreign materials due to the under-dried slurry.

The roll cleaning device according to the present example can clean the rolls (61, 63, 65, 67, 68, 69) constituting the transfer part (60), regardless of the installation location of the rolls and the type of foreign materials (P: P1, P2) present on the surfaces of the rolls.

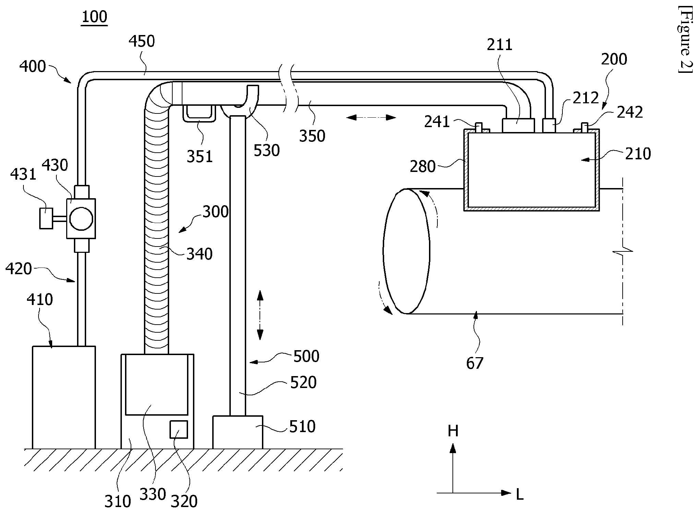

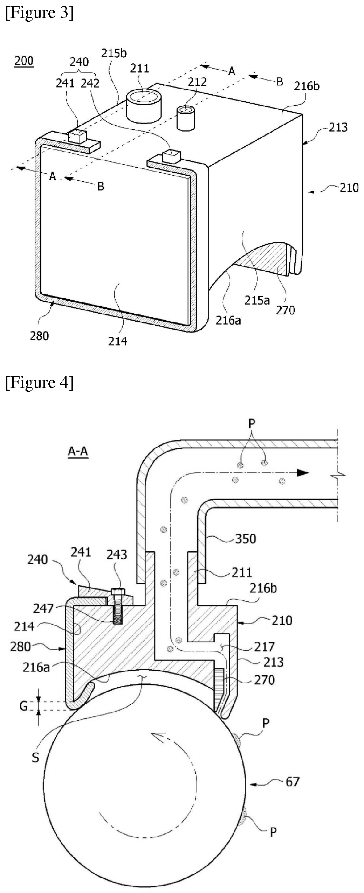

Figure 2 schematically illustrates an installation state diagram of a roll cleaning device according to a first example of the present invention mounted on a roll, Figure 3 schematically illustrates a perspective diagram of a cleaning head according to a first example of the present invention, and Figure 4 is an A-A cross-sectional diagram of Figure 3.

Referring to Figures 2 to 4, the roll cleaning device (100) comprises a cleaning head (200) including a cleaning body (210) having a foreign material suction passage (217), a knife (270) mounted on the cleaning body (210) to be contactable with a surface of a roll (any one of 61, 63, 65, 67, 68, or 69), and a clamp (240) arranged to fix a wiper to the cleaning body (210).

Also, the roll cleaning device (100) comprise a foreign material suction part (300) connected to the cleaning body (210) to be fluidly movable with the foreign material suction passage (217) and arranged to suction foreign materials (P) present on the surface of the roll (any one of 61, 63, 65, 67, 68, or 69) through the foreign material suction passage (217).

Furthermore, the roll cleaning device (100) comprises a cleaning fluid supply part (400) arranged to supply the surface of the roll (any one of 61, 63, 65, 67, 68, or 69) with a cleaning fluid (W1).

The roll cleaning device (100) is a device for individually cleaning the rolls (61, 63, 65, 67, 68, or 69) constituting the transfer part (60). For convenience of explanation, a case of cleaning the fourth roll (67), in which contamination due to foreign materials (P) most frequently occurs, will be described as an example, and hereinafter, the reference numeral of the roll is described as 67.

Hereinafter, the constitutions and structure of the cleaning head (200) will be described with reference to Figures 3 and 4.

Referring to Figure 3, the cleaning body (210) has a tubular shape. The cleaning body (210) has a plurality of sidewalls (213, 214, 215a, 215b) facing different directions along the circumferential direction, and an upper surface (216ba) and a lower surface (216a) connecting the plurality of sidewalls (213, 214, 215a, 215b) and arranged to face each other.

The plurality of sidewalls (213, 214, 215a, 215b) comprises a first sidewall (213) to a fourth sidewall (215b). The first sidewall (213) and the second sidewall (214) are arranged to face each other. The third sidewall (215a) and the fourth sidewall (215b) connect the first sidewall (213) and the second sidewall (214) and are arranged to face each other.

The lower surface (216a) has a structure in which at least a partial region is opened toward the roll (67). The lower ends of the respective sidewalls adjacent to the roll (67) may form edges of the lower surface (216a).

The first sidewall (213) and the second sidewall (214) may be arranged to protrude further toward the roll (67) than the third sidewall (215a) and the fourth sidewall (215b), respectively.

Referring to Figure 4, the cleaning body (210) is arranged such that when the first sidewall (213) and the second sidewall (214) mounted with the wiper (280) come into contact with the surface of the roll (67), a space (S) is formed between a partial region of the lower surface (216a) of the cleaning body (210) and the surface of the roll (67). For example, the third sidewall (215a) and the fourth sidewall (215b) are spaced apart from the surface of the roll (67).

The first sidewall (213) is arranged to be contactable with the surface of the roll (67). The first sidewall (213) protrudes further toward the roll (67) than the third sidewall (215a) and the fourth sidewall (215b). The first sidewall (213) is arranged to surround the knife (270).

The knife (270) is mounted on the cleaning body (210) to protrude to the lower surface (216a) of the cleaning body (210). The knife (270) may have a material having a hardness lower than the hardness of the roll (67), to prevent damage to the roll (67) when scraping the foreign material (P) from the surface of the roll (67).

When the surface of the roll (67) is a chrome-plated layer, the knife (270) preferably has a hardness lower than the hardness of the chrome-plated layer. As an example, the knife (270) may be made of a material such as Bakelite, hard Teflon, MC nylon (Monomer Casting nylon), acetal, or stainless steel. The MC nylon is a high-performance plastic used in machine parts and industrial products.

The second sidewall (214) protrudes further toward the roll (67) than the third sidewall (215a) and the fourth sidewall (215b). Referring to Figure 4, the wiper (280) is mounted on the cleaning body (210) to surround the edge of the second sidewall (214).

Referring to Figure 4, the second sidewall (214) is arranged so that in consideration of the thickness of the wiper (280), upon mounting the wiper (280), the wiper (280) comes into contact with the surface of the roll (67) together with the first sidewall (213), and upon unmounting the wiper (280), a gap (G) is formed from the surface of the roll (67). When the wiper (280) is mounted on the second sidewall (214), it fills the gap (G).

The wiper (280) may be arranged with a material capable of absorbing the cleaning fluid (W1). The wiper (280) may be arranged in the form of cloth, non-woven fabric, or sponge. The wiper (280) may have a material such as nylon, natural pulp, polyester, or very fine thread.

Referring to Figure 3, the upper surface (216ba) of the cleaning body (210) is arranged with a first fastener (211), a second fastener (212), and a clamp (240).

The clamp (240) may be arranged to fix both ends of the wiper (280) mounted on the second sidewall (214) to the upper surface (216ba) of the cleaning body (210).

Furthermore, the clamp (240) comprises a fixed axis (243) mounted on the cleaning body (210) and a push bar (241) coupled to the fixed axis (243).

The fixed axis (243) connects the push bar (241) and the cleaning body (210). The fixed axis (243) may be elastically coupled to the cleaning body (210) via a spring (247). Alternatively, the fixed axis (243) may couple the push bar (241) to the cleaning body (210) in the form of a bolt.

The push bar (241) may be mounted on the fixed axis (243) such that upon pushing, it contacts the upper surface (216ba) of the cleaning body (210), and upon releasing, it is spaced apart upward from the upper surface (216ba) of the cleaning body (210). The wiper (280) may be fixed to the upper surface (216a) of the cleaning body (210) in a pushed state of the push bar (241).

The clamp (240) may comprise a pair of push bars (241, 242). The pair of push bars (241, 242) may have the same structure and operating method.

Referring to Figures 2 and 3, the second fastener (212) is a portion to which the cleaning fluid supply pipe (450) of the cleaning fluid supply part (400) is connected.

Referring to Figures 3 and 4, the first fastener (211) is a portion connected to be fluidly movable with the foreign material suction passage (217), which may be arranged to protrude from the upper surface (216ba) of the cleaning body (210).

Referring to Figure 4, the foreign material suction passage (217) may be arranged to penetrate the lower surface (216a) between the knife (270) and the first sidewall (213). The extension tube (350) of the foreign material suction part (300) is connected to be fluidly movable with the foreign material suction passage (217) through the first fastener (211).

Hereinafter, a foreign material suction part (300) will be described with reference to Figures 2 to 4.

The foreign material suction part (300) comprises a suction drive part (310), a first operating part (320), a foreign material container (330), a corrugated pipe (340), and an extension tube (350).

The foreign material container (330) is arranged to be capable of accommodating foreign materials (P). The foreign material container (330) may be detachably mounted to the suction drive part (310).

The suction drive part (310) may be operated so that the foreign material container (330), the corrugated pipe (340), and the extension tube (350) are evacuated by sucking air from the foreign material container (330). The first operating part (320) may operate and stop the suction drive part (310) through an on-off operation.

The corrugated pipe (340) may be detachably coupled to the foreign material container (330) and the extension tube (350). The corrugated pipe (340) may be connected to be fluidly movable with the foreign material suction passage (217) through the extension tube (350). The corrugated pipe (340) is arranged to be flexibly bendable.

The extension tube (350) may be detachably arranged to the first fastener (211). The extension tube (350) may be connected to be fluidly movable with the foreign material suction passage (217) through the first fastener (211).

The extension tube (350) may be arranged with a material having heat resistance and chemical resistance. It is preferable that the extension tube (350) is arranged with a material that can withstand acetone and an alkaline cleaning fluid (NaOH). As an example, the extension tube (350) may be arranged with a material such as silicone, rubber, a resin such as polyurethane, Bakelite, hard Teflon, MC nylon (Monomer Casting nylon), or stainless steel.

Referring to Figure 4, the extension tube (350) is coupled to the cleaning body (210) through the first fastener (211). Upon operation of the suction drive part (310), the extension tube (350) is evacuated.

The suction drive part (310) may suck the foreign materials (P) from the surface of the roll (67) through the foreign material suction passage (217). The foreign materials (P) may flow through the foreign material suction passage (217), the extension tube (350), and the corrugated pipe (340) due to the negative pressure applied to the extension tube (350), and may be accommodated in the foreign material container (330).

Referring to Figure 2, the extension tube (350) may be arranged to be capable of adjusting the position of the cleaning body (210) placed on the surface of the roll (67) at a position spaced apart from the roll (67). The extension tube (350) may be arranged with a handle (351). The extension tube (350) may be seated on a support (530) of a height adjustment part (500) at a position spaced apart from the roll (67).

The height adjustment part (500) is arranged to adjust the height of the support (530) in a height direction (H) perpendicular to the bottom surface. The height adjustment part (500) comprises a support (530) and a elevating part (510).

The support (530) may have a U-shaped structure opened toward the top. The support (530) is arranged such that the extension tube (350) enables to be seated. The support (530) may be arranged to guide the movement of the extension tube (350) so that the extension tube (350) is movable back and forth along a longitudinal direction (L) of the roll.

The elevating part (510) comprises an elevating axis (520) coupled to the support (530). The elevating part (510) is disposed such that the elevating axis (520) is parallel to the height direction (H). The elevating part (510) may adjust the height of the support (530) through the length adjustment of the elevating axis (520). As one example, the elevating part (510) may use a cylinder.

The height adjustment part (500) may adjust the height of the extension tube (350) so that the extension tube (350) is positioned parallel to the roll (67) along the longitudinal direction (L) of the roll.

A worker can adjust the height of the extension tube (350) relative to the bottom surface through the height adjustment part (500) so that the cleaning head (200) contacts the surface of the roll (67). The extension tube (350) may be positioned parallel to the roll (67) in a state where the cleaning head (200) is in contact with the surface of the roll (67) through the height adjustment part (500).

A worker can perform the cleaning work of the roll (67) through the extension tube (350) and the height adjustment part (500) even at the position away from the roll (67), while maintaining a contact position where the cleaning head (200) contacts the surface of the roll (67), i.e., a contact position along the height direction (H), constantly (216a).

Also, a worker can quickly clean the entire area of the surface of the roll (67) through the cleaning head (200) with only a simple operation of moving the extension tube (350) seated to the support (530) of the height adjustment part (500) back and forth along the longitudinal direction (L) of the roll.

Furthermore, even if the cleaning head (200) does not move along the circumferential direction of the roll (67), the knife (270) can scrape off foreign materials (P) from the surface of the roll (67) and the wiper (280) can wipe the surface of the roll (67) upon rotational force of the roll (67), so that the roll (67) cleaning device (100) can also clean the entire area of the roll (67) with only a simple operation of moving the cleaning head (200) back and forth along the longitudinal direction (L) of the roll through the extension tube (350).

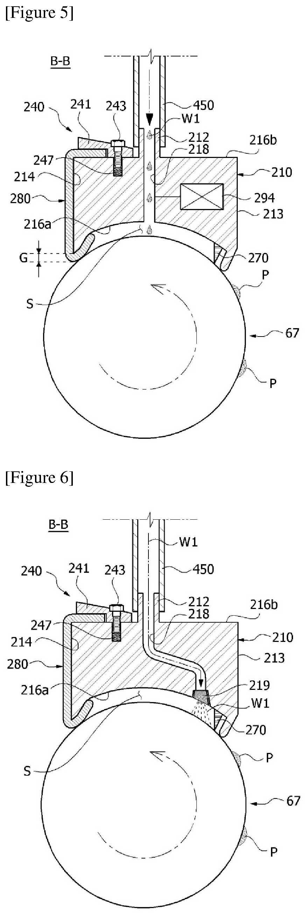

Hereinafter, a cleaning fluid supply part (400) and a drop part (294) will be described with reference to Figures 2 and 5. Figure 5 is a B-B cross-sectional diagram of Figure 4, where Figure 5 is a diagram for explaining a structure of a cleaning head (200) arranged to discharge a cleaning fluid (W1) in a drop manner, according to one example, and Figure 6 is a diagram for explaining a structure of a cleaning head (200) arranged to inwardly spray a cleaning fluid (W1) onto a surface of a roll (67) through a head nozzle (219), according to another example.

Referring to Figures 5 and 6, the cleaning body (210) is arranged with a cleaning fluid passage (218). The cleaning fluid passage (218) is a passage separated from the foreign material suction passage (217). The cleaning fluid passage (218) is a passage connecting the second fastener (212) and the lower surface (216a) of the cleaning body.

The cleaning fluid (W1) may be supplied to the cleaning fluid passage (218) through the cleaning fluid supply pipe (450). The cleaning fluid (W1) may flow through the cleaning fluid passage (218) to fall onto the surface of the roll (67).

As one example, referring to Figure 5, the cleaning body (210) may be arranged so that the cleaning fluid (W1) is discharged in the form of drops from the cleaning fluid passage (218). In the present example, for convenience of explanation, the constitution in which the cleaning fluid (W1) is discharged in the form of drops from the cleaning fluid passage (218) is referred to as a "drop part (294)."

The drop part (294) may comprise a cleaning fluid passage (218). Alternatively, the drop part (294) may be mounted inside the cleaning body (210) to be fluidly movable with the cleaning fluid passage (218). The drop part (294) is arranged to discharge the cleaning fluid (W1) in the form of drops from the cleaning fluid passage (218) using gravity.

As another example, referring to Figure 6, the cleaning fluid (W1) may be sprayed onto the surface of the roll (67) through a head nozzle (219) mounted on the lower surface (216a) of the cleaning body (210). The head nozzle (219) is mounted on the lower surface (216a) of the cleaning body (210) to be fluidly movable with the cleaning fluid passage (218).

Specifically, the head nozzle (219) is arranged to spray the cleaning fluid (W1) in a direction from the lower surface (216a) of the cleaning body (210) toward the surface of the roll (67) between the knife (270) and the second sidewall (214). The head nozzle (219) may spray the cleaning fluid (W1) in a mist form. The head nozzle (219) may be operated to spray the cleaning fluid (W1) in an on state of a second operating part (431).

The cleaning head (200) having such a structure can prevent the cleaning fluid (W1) from scattering around the roll (67) by discharging the cleaning fluid (W1) from a space (S) between the lower surface (216a) of the cleaning body (210) and the surface of the roll (67) to the surface of the roll (67).

The cleaning fluid supply part (400) is intended to supply the cleaning fluid passage (218) of the cleaning head (200) with the cleaning fluid (W1). The cleaning fluid supply part (400) may be mounted to the second fastener (212) of the cleaning body (210) to be fluidly movable with the cleaning fluid passage (218).

Referring to Figures 2 and 3, the cleaning fluid supply part (400) may comprise a cleaning fluid container (410), a cleaning fluid supply pipe (450), a cleaning fluid drive part (430), and a connecting pipe (420).

The cleaning fluid container (410) is a container storing the cleaning fluid (W1). A connecting pipe (420) connects the cleaning fluid drive part (430) and the cleaning fluid container (410).

The cleaning fluid drive part (430) is arranged to suck the cleaning fluid (W1) from the cleaning fluid container (410) and to discharge it into the cleaning fluid supply pipe (450). The cleaning fluid drive part (430) is connected to the connecting pipe (420) and the cleaning fluid supply pipe (450). As one example, the cleaning fluid drive part (430) may use a pump.

The cleaning fluid supply pipe (450) may be detachably coupled to the second fastener (212) of the cleaning body (210). The cleaning fluid supply pipe (450) may be arranged in the form of a flexibly bendable tube. Furthermore, the cleaning fluid supply pipe (450) may be mounted on the extension tube (350) of the foreign material suction part (300) and may be arranged to be movable along with the extension tube (350).

The cleaning fluid supply pipe (450) may be arranged with a material having heat resistance and chemical resistance. It is preferable that the cleaning fluid supply pipe (450) is arranged with a material that can withstand acetone and an alkaline cleaning fluid (NaOH). As an example, the cleaning fluid supply pipe (450) may be arranged with a material such as silicone, rubber, or a resin such as polyurethane.

The cleaning fluid supply part (400) may be driven separately from the foreign material suction part (300). The cleaning fluid drive part (430) may be on-off operated through a second operating part (431).

Upon on operation of the second operating part (431), the cleaning fluid drive part (430) is operated to suck the cleaning fluid (W1) from the cleaning fluid container (410) into the connecting pipe (420) and to discharge the cleaning fluid (W1) into the cleaning fluid supply pipe (450).

Upon operation of the cleaning fluid drive part (430), the cleaning fluid (W1) flows toward the cleaning head (200) along the cleaning fluid supply pipe (450). The cleaning fluid (W1) may be discharged to the surface of the roll (67) through the cleaning fluid passage (218) of the cleaning head (200). In the present example, the cleaning fluid (W1) may be discharged to the surface of the roll (67) from the space (S) between the lower surface (216a) of the cleaning body (210) and the surface of the roll (67).

The cleaning work of the roll (67) may be performed in a rotated state of the roll (67). The cleaning head (200) maintains the state where the wiper (280) is in contact with the surface of the roll (67).

The cleaning fluid (W1) may be absorbed in the wiper (280) provided in the cleaning head (200) while flowing along the surface of the roll (67). The cleaning fluid (W1)-absorbed wiper (280) may clean the surface of the roll (67) in a wet manner. The wiper (280) may wipe off foreign materials (P) present on the surface of the roll (67) using the rotational force of the roll (67) in a state where it is in contact with the surface of the roll (67).

If the cleaning head (200) is driven together with the foreign material suction part (300) and the cleaning fluid supply part (400) in a state where it is in contact with the surface of the rotating roll (67), the roll (67) cleaning device (100) can perform the processes of scraping foreign materials (P) from the surface of the rotating roll (67) through the knife (270), sucking the scraped foreign materials (P) through the foreign material suction part (300), and wiping the surface of the rotating roll (67) with the cleaning fluid (W1)-absorbed wiper (280) at once. The roll (67) cleaning device (100) can cleanly clean the surface of the roll (67) regardless of the type of foreign materials (P) present on the surface of the roll (67).

Furthermore, even while the coated electrode (3) travels along the roll (67), the cleaning head (200) can be disposed on the remaining region of the roll (67) that is not in contact with the coated electrode (3) to clean the roll (67). The roll (67) cleaning device (100) can clean the roll (67) during the electrode process, thereby preventing reduced productivity of the coated electrode (3) due to the cleaning work of the roll (67).

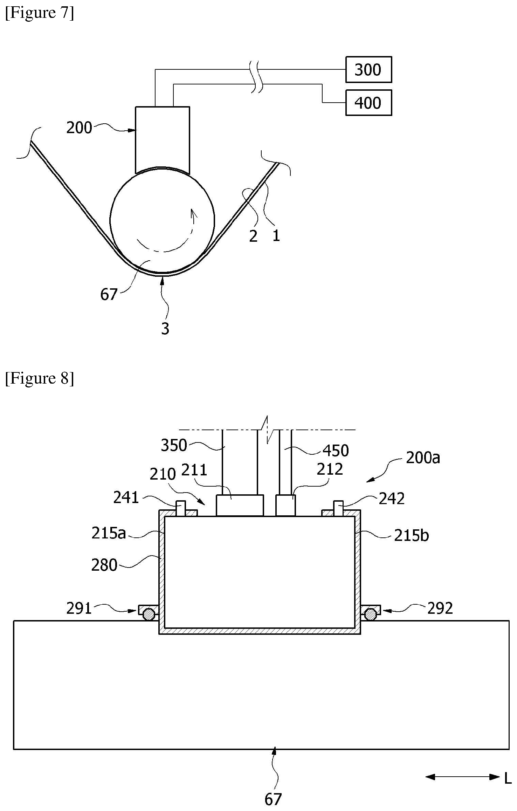

Figure 8 is an installation state diagram of a cleaning head, in which a bearing member is provided therein, mounted on a roll according to a second example.

The cleaning head (200a) according to the second example is one obtained by mounting a bearing member (291, 292) on the cleaning head (200) of the first example as described above.

The bearing member (291, 292) may be mounted on the cleaning body (210) to be cable of idling along the surface of the roll (67) when the cleaning body (210) is placed on the surface of the roll (67). The bearing member (291, 292) may be mounted on the third sidewall (215a) and the fourth sidewall (215b) of the cleaning body (210) to be contactable with the surface of the roll (67).

The cleaning head (200a) may smoothly move the surface of the roll (67) through the bearing member (291, 292) when the extension tube (350) moves the cleaning body (210) back and forth in the longitudinal direction (L) of the roll.

The bearing member (291, 292) reduces frictional force between the cleaning body (210) of the cleaning head (200a) and the surface of the roll (67), whereby it allows the cleaning head (200a) to move smoothly the surface of the roll (67).

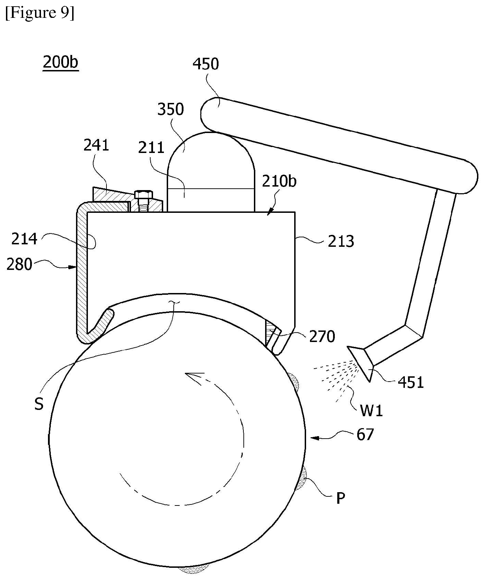

Figure 9 is a diagram for explaining a structure of a cleaning head (200b) arranged to outwardly spray a cleaning fluid according to a third example.

The cleaning head (200b) according to the present example comprises a cleaning body (210b) having a first fastener (211). The cleaning body (210b) according to the present example has a structure in which the cleaning fluid passage (218) of the cleaning body (210) of the first example as described above is omitted.

The cleaning head (200b) is arranged such that a knife (270) is mounted on the first side (213) of the cleaning body (210b), and a wiper (280) is mountable on the second side (214). The wiper (280) may be fixed to the upper surface (216ba) of the cleaning body (210b) through a push bar (241) of a clamp.

In the present example, a cleaning fluid supply part (not shown) is arranged to spray a cleaning fluid (W1) onto the surface of the roll (67) through a nozzle (451) disposed outside the cleaning body (210b). The nozzle (451) is coupled to a cleaning fluid supply pipe (450). The cleaning fluid supply pipe (450) may be fixed to the extension tube (350) to move together with the extension tube (350). The extension tube (350) may be coupled to the first fastener (211) of the cleaning body (210b) to adjust the position of the cleaning body (210b).

The cleaning head (200b) according to the present example reduces the size of the cleaning body (210b), compared to the cleaning head (200a) with the embedded head nozzle (219) of the first example as described above, by disposing the nozzle (451) outside the cleaning body (210b), whereby it is possible to promote compactification of the device.

Furthermore, by spraying the cleaning fluid (W1) onto the surface of the roll (67) through the nozzle (451), and then scraping the foreign materials (P) present on the surface of the roll (67) using the knife (270), it is possible to easily remove the foreign materials (P).

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to a roll cleaning device related to at least one example of the present invention, it can simultaneously perform processes of scraping foreign materials from the surface of the roll and wiping the surface of the roll using the rotational force of the roll in a state where the knife and the wiper are placed to be in contact with the surface of the roll.

## Claims

1. A roll cleaning device comprising:
a cleaning head including a cleaning body having a foreign material suction passage and a cleaning fluid passage partitioned from the foreign material suction passage, a knife mounted on the cleaning body to be contactable with a surface of a roll, and a clamp arranged to fix a wiper to the cleaning body; and
a foreign material suction part connected to the cleaning body to be fluidly movable with the foreign material suction passage and arranged to suction foreign materials present on the surface of the roll through the foreign material suction passage.

2. The roll cleaning device according to claim 1, wherein
the cleaning body comprises a first sidewall surrounding the knife, and a second sidewall facing the first sidewall and having the wiper mounted, and the knife and the wiper are arranged to be contactable with the roll surface.

3. The roll cleaning device according to claim 2, wherein
the cleaning body comprises a lower surface connecting the first sidewall and the second sidewall, and the knife is mounted on the cleaning body to protrude further toward the roll than the lower surface, and the cleaning body is arranged so that a space is formed between the surface of the roll and a partial region of the lower surface when the knife contacts the surface of the roll.

4. The roll cleaning device according to claim 3, wherein
the cleaning body is arranged so that the foreign material suction passage penetrates the lower surface between the knife and the first sidewall.

5. The roll cleaning device according to claim 1, wherein
the foreign material suction part comprises an extension tube connected to be fluidly movable with the foreign material suction passage and detachably coupled to the cleaning body, and
the extension tube is arranged with a handle, and the handle is arranged to be capable of adjusting the position of the cleaning head placed on the surface of the roll at a position spaced apart from the roll.

6. The roll cleaning device according to claim 5, wherein the foreign material suction part comprises:
a foreign material container arranged to be capable of accommodating foreign materials;
a corrugated pipe detachably coupled to the foreign material container and the extension tube, and connected to be fluidly movable with the foreign material suction passage through the extension tube; and
a suction drive part which is movable so that the foreign material container, the corrugated pipe, and the extension tube are evacuated by sucking air from the foreign material container.

7. The roll cleaning device according to claim 5, comprising
a support arranged so that the extension tube enables to be seated, and further comprising
a height adjustment part arranged to adjust the height of the support in a height direction perpendicular to a bottom surface.

8. The roll cleaning device according to claim 7, wherein
the support is arranged to guide the movement of the extension tube so that the extension tube is movable back and forth along a longitudinal direction of the roll.

9. The roll cleaning device according to claim 3, wherein
the cleaning fluid passage is arranged to penetrate the lower surface of the cleaning body while being partitioned from the foreign material suction passage, and a cleaning fluid is arranged to be provided to the surface of the roll through the cleaning fluid passage.

10. The roll cleaning device according to claim 9, wherein
the cleaning head further comprises a drop part mounted on the cleaning body to discharge the cleaning fluid in the form of drops from the cleaning fluid passage.

11. The roll cleaning device according to claim 9, wherein
the cleaning head further comprises a head nozzle connected to the cleaning fluid passage and mounted on the lower surface of the cleaning body to spray the cleaning fluid onto the surface of the roll.

12. The roll cleaning device according to claim 9, further comprising
a cleaning fluid supply part mounted on the cleaning body to be fluidly movable with the cleaning fluid passage and arranged to supply the cleaning fluid.

13. The roll cleaning device according to claim 12, wherein the cleaning fluid supply part comprises:
a cleaning fluid supply pipe connected to be fluidly movable with the cleaning fluid passage and detachably coupled to the cleaning body;
a cleaning fluid container storing the cleaning fluid; and
a cleaning fluid drive part connected to the cleaning fluid container and the cleaning fluid supply pipe, and arranged to suck the cleaning fluid from the cleaning fluid container and to discharge it into the cleaning fluid supply pipe.

14. The roll cleaning device according to claim 3, wherein
the clamp is mounted on an upper surface opposite the lower surface of the cleaning body, and arranged to fix both ends of the wiper mounted on the second sidewall, respectively, to the upper surface of the cleaning body, and
the clamp comprises a push bar arranged to fix one end of the wiper to the upper surface of the cleaning body, and a fixed axis connecting the push bar and the cleaning body and elastically coupled to the cleaning body.

15. The roll cleaning device according to claim 3, wherein
the cleaning body comprises a third sidewall and a fourth sidewall connecting the first sidewall and the second sidewall, and arranged to face each other, and
further comprises a bearing member mounted on the third sidewall and the fourth sidewall, and arranged to be capable of idling along the surface of the roll upon movement of the cleaning body.
